(19) Europäisches Patentamt
European Patent Office
Office européen des brevets

(11) **EP 2 848 875 B1**

(12) **EUROPEAN PATENT SPECIFICATION**

(45) Date of publication and mention
of the grant of the patent:
**21.03.2018 Bulletin 2018/12**

(51) Int Cl.:
*F24H 9/20* *(2006.01)*    *F24D 19/10* *(2006.01)*
*G05D 23/19* *(2006.01)*

(21) Application number: **14184130.4**

(22) Date of filing: **09.09.2014**

(54) **Hot-water supply system and control method for the same**

Heißwasserversorgungssystem und Verfahren zur Steuerung davon

Système d'alimentation en eau chaude et son procédé de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2013 JP 2013188216**

(43) Date of publication of application:
**18.03.2015 Bulletin 2015/12**

(73) Proprietor: **MITSUBISHI HEAVY INDUSTRIES
THERMAL SYSTEMS, LTD.
Tokyo 108-8215 (JP)**

(72) Inventors:
• **Teraoka, Masahiro**
 **TOKYO, 108-8215 (JP)**
• **Maeno, Masashi**
 **TOKYO, 108-8215 (JP)**

(74) Representative: **Intès, Didier Gérard André et al
Cabinet Beau de Loménie
158 rue de l'Université
75340 Paris Cedex 07 (FR)**

(56) References cited:
DE-A1- 10 257 431      DE-A1-102011 011 022
US-A1- 2002 125 242    US-A1- 2004 173 600
US-A1- 2005 022 542    US-A1- 2007 179 678
US-A1- 2009 120 380

## Description

{Technical Field}

The present invention relates to a hot-water supply system provided with a heating unit and one or more hot-water storage tanks that sequentially store high-temperature water produced by the heating unit, forming temperature stratification from the top side thereof, and to a control method therefor.

{Background Art}

As described above, in a hot-water supply system provided with one or more hot-water storage tanks that are connected to a heating unit via a low-temperature water pipe and a high-temperature water pipe and that sequentially store high-temperature water produced by the heating unit by forming temperature stratification from the top side thereof, a plurality of temperature sensors are provided so as to be arranged in the vertical direction in the hot-water storage tank, and with the temperature sensor which is disposed at the lowest position therein and which serves as a first temperature sensor that detects timing when hot water at a set temperature is stored at a 100% level in the tank, it is determined, based on a detected value from this first temperature sensor, that the hot water at the set temperature is stored to the 100% level during a heating-up operation and an additional heating operation, thereby controlling the operation of the heating unit.

For example, Patent Literature 1 discloses a hot-water supply system in which a plurality of temperature sensors are provided to be arranged in the vertical direction in a hot-water storage tank, and when the detected value from each temperature sensor is at or below a set temperature, the heating unit is started up, and when the detected value from each temperature sensor exceeds the set temperature, the heating unit is stopped.

{Citation List}

{Patent Literature}

{PTL 1}
Japanese Unexamined Patent Application, Publication No. 2002-349965 US 2007/179678 A1 discloses a system and a method according to the preamble of independent claims 1 and 4.

{Summary of Invention}

{Technical Problem}

As described above, in a hot-water supply system of the type in which high-temperature water produced by a heating unit is sequentially stored so as to form temperature stratification from the top of the hot-water storage tank, in general, when the detected value from the temperature sensor disposed at the lowest position in the hot-water storage tank is at or above a set temperature, it is determined that 100% hot-water storage is completed. In European regulations related to these types of hot-water supply systems, in a non-operating state after 100% hot-water storage is completed, it is stipulated that the set temperature must be kept for 48 hours by means of a temperature-maintaining operation (additional heating operation).

Normally, when the water is left unsupplied after 100% hot-water storage is completed, because of natural heat dissipation and heat transfer, the temperature difference between a high-temperature part and a low-temperature part becomes smaller due to a temperature drop at the high-temperature part and a temperature rise at the low-temperature part, and the temperature layer width expands. In this state, if the additional heating operation is performed to maintain the temperature, and it is determined that the additional heating operation is completed by using said temperature sensor that detects completion of 100% hot-water storage, the hot-water temperature at the top of the hot-water storage tank is lower than the initially heated temperature, and in turn the amount of stored heat drops. As a result, when discharging hot water, it is not possible to supply hot water with the high temperature that was set initially.

On the other hand, if the additional heating operation is carried out needlessly in order to avoid a temperature drop of the high-temperature water, with effects due to a temperature rise of the low-temperature part, there are also problems such as a drop in efficiency of the heating unit, a drop in the COP (coefficient of performance), and so forth. In other words, maintaining the temperature of the high-temperature water and maintaining the COP of the heating unit are in a mutually conflicting relationship.

The present invention is made in light of these circumstances, and an object thereof is to provide a hot-water supply system that can ensure a certain amount of stored heat even during temperature-maintaining operation and that can supply hot water with a high temperature close to the initial set temperature, as well as a control method therefor.

{Solution to Problem}

In order to solve the problems described above, the hot-water supply system of the present invention and the control method therefor employ the following solutions.

A hot-water supply system according to the present invention comprises: a heating unit that produces high-temperature water by heating low-temperature water; and at least one hot-water storage tank that is connected to the heating unit via a low-temperature water pipe and a high-temperature water pipe and that sequentially stores the high-temperature water produced in the heating unit, forming a temperature stratification from a top side of the hot-water storage tank, wherein the hot-water supply system is capable of maintaining temperature of hot water stored in the hot-water storage tank after completion of storing hot water at a set temperature, wherein a plurality of temperature sensors are provided to be mutually apart in a vertical direction in the hot-water storage tank, and the temperature sensor provided at the lowest level therein is a first temperature sensor that detects a situation that the hot water with the set temperature is stored to a 100% level, the hot-water supply system further comprising: a control unit that controls the operation and stopping of the heating unit during a heating-up operation and an additional heating operation on the basis of a detected value from the first temperature sensor, wherein, during the additional heating operation, when the detected value from the first temperature sensor reaches a set temperature, the control unit corrects the set temperature of the first temperature sensor based on a temperature difference ($\Delta T$-$\Delta T'$) between a detected value ($\Delta T'$) from a second temperature sensor provided above the first temperature sensor and a detected value ($\Delta T$) that the second temperature sensor detects during the heating-up operation, and the control unit controls the operation and stopping of the heating unit with the corrected value serving as a target temperature.

According to the present invention, the plurality of temperature sensors are provided to be mutually apart in the vertical direction in the hot-water storage tank, the temperature sensor provided at the lowest position thereof is a first temperature sensor that detects that hot water at the set temperature is stored to a level of 100%, and the operation and stopping of the heating unit are controlled during the heating-up operation and the additional heating operation on the basis of the detected value from the first temperature sensor. In addition, a control unit is provided, and during the additional heating operation, when the detected value from the first temperature sensor reaches the set temperature, the control unit corrects the set temperature of the first temperature sensor on the basis of the temperature difference ($\Delta T$-$\Delta T'$) between the detected value ($\Delta T'$) from the second temperature sensor which is provided thereabove and the detected value ($\Delta T$) that the second temperature sensor detected during the heating-up operation, and controls the operation and stopping of the heating unit with this corrected value serving as a target value. Thus, during the heating-up operation and the additional heating operation, the operation and stopping of the heating unit are controlled on the basis of the detected value from the first temperature sensor, and 100% hot-water storage and subsequent temperature maintenance (temperature holding) are performed. However, in the non-operating state after 100% hot water storage is completed, because of natural heat dissipation and heat transfer, the temperature difference between the high-temperature part and the low-temperature part becomes smaller, and the width of the temperature layer becomes larger. Therefore, the additional heating operation is performed in this state in order to hold the temperature. When it is determined that additional heating is completed based on the detected value from the first temperature sensor that detects 100% hot-water storage, the hot-water temperature at the top of the hot-water storage tank becomes lower than the initial heating-up temperature, leading to a reduction in the amount of stored heat. Thus, during the additional heating operation, when the first temperature sensor reaches the set temperature, the set temperature of the first temperature sensor is corrected on the basis of the temperature difference ($\Delta T$-$\Delta T'$) between the detected value ($\Delta T'$) from the second temperature sensor provided thereabove and the detected value ($\Delta T$) that the second temperature sensor detected during the heating-up operation, and the heating unit is operated and stopped with this corrected value serving as a target value. Accordingly, it is possible to reduce the amount of the drop in the hot-water temperature at the top of the hot-water storage tank. By doing so, the drop in the amount of stored heat during the standing time, after completing 100% hot-water storage, can be suppressed, and when discharging hot water, hot water with a higher temperature close to the set temperature can be supplied.

Optionally, in the above-described hot-water supply system according to the present invention, the corrected value is calculated by an equation (1) shown below:

$$\texttt{set temperature + } (\Delta T\texttt{-}\Delta T')/\alpha \quad (1)$$

where $\alpha$ is an arbitrary coefficient.

Accordingly, the corrected value is calculated from "set temperature + ($\Delta T$-$\Delta T'$)/$\alpha$ (where $\alpha$ is an arbitrary

coefficient)". Thus, during the additional heating operation, the hot-water temperature at the top of the hot-water storage tank can be subjected to additional heating to a temperature between the initial detected value ($\Delta T$) detected during the heating-up operation and the detected value ($\Delta T'$) detected during the additional heating operation. By doing so, the amount of the drop in hot-water temperature at the top of the hot-water storage tank during the temperature holding time can be considerably reduced, and hot water at a higher temperature can be supplied. In addition, a drop in COP (coefficient of performance) of the heating unit due to excessive additional heating can be suppressed.

Optionally, in the above-described hot-water supply system according to the present invention, in the equation (1) for calculating the corrected value, the coefficient $\alpha$ is set to 2.

Accordingly, in Equation (1) for calculating the corrected value, the coefficient $\alpha$ is set to 2. Thus, during the additional heating operation, the hot-water temperature at the top of the hot-water storage tank can be controlled to and maintained at a temperature substantially half way between the initial detected value ($\Delta T$) detected during the heating-up operation and the detected value ($\Delta T'$) detected during the additional heating operation. Therefore, balance can be achieved between maintaining the hot-water temperature and maintaining the COP of the heating unit, which are in a mutually conflicting relationship, and it is possible to perform control for suppressing the respective reductions thereof to moderate levels.

The invention also relates to a control method of a hot-water supply system, wherein the hot-water supply system comprises: a heating unit that produces high-temperature water by heating low-temperature water; and at least one hot-water storage tank that is connected to the heating unit via a low-temperature water pipe and a high-temperature water pipe and that sequentially stores the high-temperature water produced in the heating unit, forming a temperature stratification from a top side of the hot-water storage tank, the hot-water supply system being capable of maintaining temperature of hot water stored in the hot-water storage tank after completion of storing hot water at a set temperature, wherein the hot-water supply system has a plurality of temperature sensors being provided to be mutually apart in a vertical direction in the hot-water storage tank, and the temperature sensor provided at the lowest level therein is a first temperature sensor that detects a situation that the hot water with the set temperature is stored to a 100% level, the hot-water supply system control method comprising:

a step of controlling the operation and stopping of the heating unit during a heating-up operation and an additional heating operation on the basis of a detected value from the first temperature sensor, and correcting the set temperature of the first temperature sensor based on a temperature difference ($\Delta T-\Delta T'$) between a detected value ($\Delta T'$) of a second temperature sensor provided above the first temperature sensor and a detected value ($\Delta T$) that the second temperature sensor detects during the heating-up operation, the correction is performed during the additional heating operation and when the detected value from the first temperature sensor reaches the set temperature, and controlling the operation and stopping of the heating unit with the corrected value serving as a target temperature.

According to the present invention, during the heating-up operation and the additional heating operation, the operation and stopping of the heating unit are controlled on the basis of the detected value from the first temperature sensor, and 100% hot-water storage and subsequent temperature maintenance (temperature holding) are performed. In the non-operating state after completing 100% hot-water storage, because of natural heat dissipation and heat transfer, the temperature difference between the high-temperature part and the low-temperature part becomes smaller, and the width of the temperature layer becomes larger. Therefore, in this state, when the additional heating operation is performed for holding the temperature, and it is determined that the additional heating operation is completed based on the detected value from the first temperature sensor which detects 100% hot-water storage, the hot-water temperature at the top of the hot-water storage tank becomes lower than the initial heating-up temperature, and in turn the amount of stored heat ends up being lower. Thus, during the additional heating operation, when the first temperature sensor reaches the set temperature, the set temperature of the first temperature sensor is corrected on the basis of the temperature difference ($\Delta T-\Delta T'$) between the detected value ($\Delta T'$) from the second temperature sensor provided thereabove and the detected value ($\Delta T$) that the second temperature sensor detected during the heating-up operation, and the heating unit is operated and stopped with this corrected value serving as a target value, thereby making it possible to reduce the amount of the drop in hot-water temperature at the top of the hot-water storage tank. Accordingly, it is possible to suppress a drop in the amount of stored heat during a non-operated time after completing 100% hot-water storage, and when discharging hot water, it is possible to supply hot water with a higher temperature close to the set temperature.

(Advantageous Effects of Invention}

In a hot-water supply system, in a temperature holding state, when an additional heating operation is performed for holding the temperature, and when it is determined that the additional heating is completed on the basis of the detected value from the first temperature sensor which detects 100% hot-water storage, the hot-water temperature at the top of the hot-water storage tank becomes lower than the initial heating-up temperature, and in turn the amount of stored heat is reduced. To make an improveimet in this phenomenon, with the hot-water supply system and control method therefor of the present invention, during the additional heating operation, when the first temperature sensor reaches the set temperature, the set temperature of the first temperature sensor is corrected on the basis of the temperature difference ($\Delta T-\Delta T'$) between the detected value ($\Delta T'$) from the second temperature sensor provided thereabove and the detected value ($\Delta T$) that the second temperature sensor detected during the heating-up operation, and the heating unit is operated and stopped with this corrected value serving as a target temperature, thereby making it possible to reduce the amount of the drop in hot-water temperature at the top of the hot-water storage tank. As a result, it is possible to suppress a drop in the amount of stored heat during a non-operated time after 100% hot-water storage is completed, and when discharging hot water, it is possible to supply hot water with a higher temperature close to the originally set temperature.

{Brief Description of Drawings}

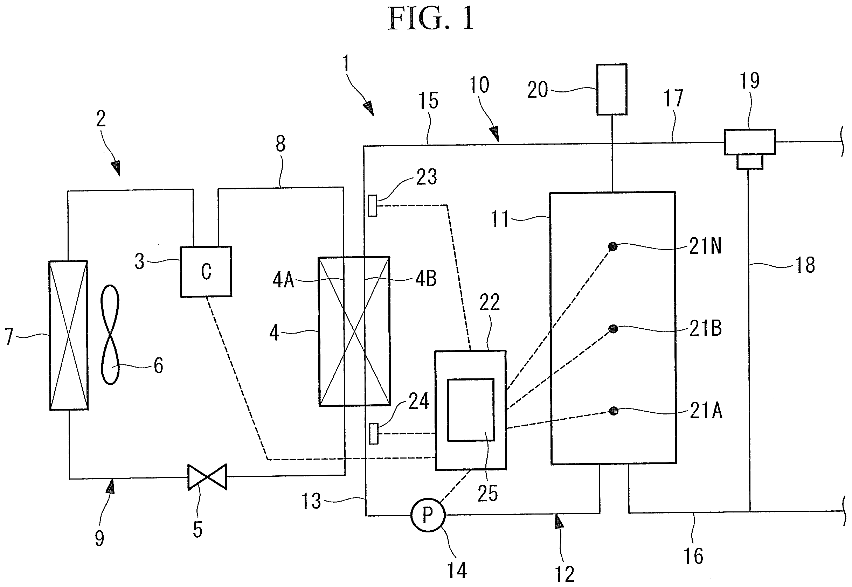

{Fig. 1}
Fig. 1 is a diagram showing a configuration of a hot-water supply system according to an embodiment of the present invention.
{Fig. 2}
Fig. 2 is an explanatory diagram showing the change in hot-water temperature in a hot-water storage tank during a heating-up operation and an additional heating operation performed by the above hot-water supply system.

{Description of Embodiment}

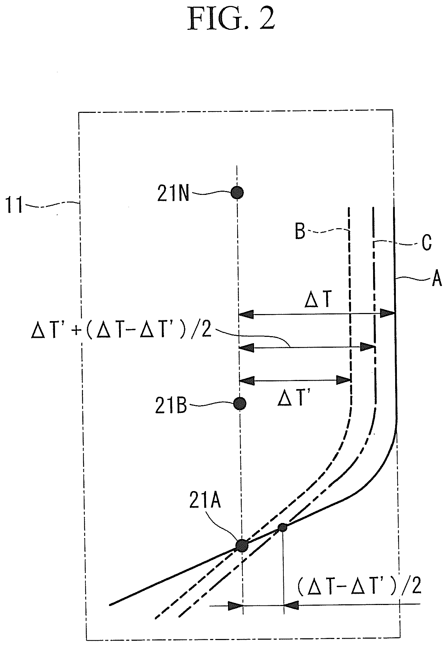

An embodiment of the present invention will be described below with reference to Fig. 1 and Fig. 2.
Fig. 1 is a diagram showing the configuration of a hot-water supply system according to an embodiment of the present invention.
In the hot-water supply system 1 of this embodiment, a heating unit using a supercritical-cycle heat pump, in which $CO_2$ refrigerant is employed, is illustrated as an example of a heating unit 2. The heating unit 2 is not limited to the heat pump of this embodiment, and devices with other configurations, such as boilers, fuel cells and so forth, can of course be used.
The heat-pump heating unit (heating unit) 2 includes a closed-cycle refrigerant circulating circuit 9 in which a compressor 3 that compresses refrigerant, a water/refrigerant heat exchanger (gas cooler) 4 that functions as a gas cooler to cause heat exchange between the refrigerant and water, a pressure reducing means 5 formed of an electronic expansion valve or the like that reduces the pressure of the refrigerant, and an evaporator 7 that causes evaporation of the refrigerant via heat exchange with outside air that is made to flow by a fan 6 are connected in this order via a refrigerant pipe 8. Here, the heat-pump heating unit 2 is assumed to be a supercritical-cycle heat pump that is filled with $CO_2$ refrigerant as the working medium, but it may be any known type of heating unit.
In addition, the water/refrigerant heat exchanger (gas cooler) 4 is one that produces high-temperature water by heat exchange between high-temperature, high-pressure refrigerant gas flowing in a refrigerant flow channel 4A and water flowing in a water flow channel 4B and has a configuration in which the refrigerant gas flowing through the refrigerant flow channel 4A and the water flowing through the water flow channel 4B undergo reverse-flow heat exchange.
On the other hand, a hot-water supplying unit 10 includes a hot-water storage tank 11 having a necessary capacity for storing hot water produced by the heat-pump heating unit 2, and a water circuit 12 in which the water in the water flow channel 4B of the water/refrigerant heat exchanger 4 of the heat-pump heating unit 2 circulates via this hot-water storage tank 11. This hot-water storage tank 11 is configured to store hot water so as to form temperature stratification by drawing out low-temperature water from the bottom part thereof and supplying it to the heating unit 2, and in turn by supplying high-temperature water produced by the heat-pump heating unit 2 to the upper part of the tank.
The hot-water storage tank 11 may have a configuration in which a plurality of tanks with comparatively small sizes and small capacities are connected in series to each other via connecting pipes. In this case, the hot-water storage tank to which a high-temperature water pipe from the heating unit 2 is connected serves as the most upstream tank, and a hot-water discharge pipe leading to the load side is connected to the top of this hot-water storage tank. Also, in this case, the system is configured so that the bottom of this hot-water storage tank and the top of the hot-water storage tank on the downstream side thereof are connected with a connecting pipe so that a plurality of hot-water storage tanks are sequentially connected together in series, and a water supply pipe and a low-temperature water pipe that leads to the heating unit 2 are connected to the bottom of the most downstream hot-water storage tank. This hot-water storage tank 11 may be a known type of tank.
The water circuit 12 is formed of, among other components, the following elements: a low-temperature water pipe 13 that supplies low-temperature water from the bottom of the hot-water storage tank 11 to the water flow channel 4B in the water/refrigerant heat exchanger 4; a water pump 14 provided in the low-temperature water pipe 13; a high-temperature water pipe 15 that supplies the high-temperature water produced by the water/refrigerant heat exchanger 4 to the upper part of the hot-water storage tank 11; a water supply pipe 16 for supplying water to the hot-water storage tank 11; a hot-water discharge pipe 17 for supplying high-temperature water stored in the hot-water storage tank 11 to the load side; a bypass pipe 18 provided between the water supply pipe 16 and the hot-water discharge pipe 17; a temperature-sensing-type mixing valve 19 that mixes the water from the bypass pipe 18 and the high-temperature water from the hot-water storage tank 11 to form hot water of a prescribed temperature and that supplies this hot water to the load side; and an air vent 20 through which air trapped in the water circuit 12 is vented to the outside.

A plurality of temperature sensors 21A, 21B, and 21N are provided in the hot-water storage tank 11 along the vertical direction thereof. In the plurality of temperature sensors 21A, 21B, and 21N, the temperature sensor 21A is a first temperature sensor that is provided at a 100% hot-water storage level, the temperature sensor 21B is a second temperature sensor that is provided at, for example, a 60% hot-water storage level, and the temperature sensor 21N is a third temperature sensor that is provided, for example, at a 20% hot-water storage level, and the detected values from the temperature sensors 21A, 21B, and 21N are input to a control unit 22. Since the number of these temperature sensors is not necessarily three, it is possible to use a configuration in which N temperature sensors, where N is 2 or more, are provided with suitable spacing therebetween.

The control unit 22 controls the rotational speeds of the compressor 3 in the heat-pump heating unit 2 and the water pump 14 on the basis of the detected values from temperature sensors 23 and 24 provided in the low-temperature water pipe 13 and the high-temperature water pipe 15 during operation of the hot-water supply system 1 to thereby control the hot water production capacity, and thus to produce high-temperature water with a set temperature. In addition, the control unit 22 controls the operation/stopping of the heat-pump heating unit 2 and the water pump 14 during the operation of the hot-water supply system 1 on the basis of the detected values from the temperature sensors 21A, 21B, and 21N, to perform a so-called heating-up operation and additional heating operation.

By using nighttime electricity, which is generally economical, to perform the heating-up operation at night time, the hot-water supply system 1 operates so that high-temperature water with the set temperature is stored in the hot-water storage tank 11 up to the 100% hot-water storage level, and consumes this high-temperature water during a consumption period by discharging it to the load side via the hot-water discharge pipe 17. However, when the hot water is left unused after completion of the heating-up operation, the temperature of the high-temperature water in the hot-water storage tank 11 drops due to natural heat dissipation and heat transfer, or when there is insufficient high-temperature water due to consumption of the high-temperature water, the additional heating operation is performed as needed.

In European standards (EN16147), it is stipulated that the set temperature must be kept for 48 hours by performing a temperature-maintaining operation (additional heating operation) during the non-operated period after completing 100% hot-water storage. With this stipulation, by operating the heat-pump heating unit 2 and the water pump 14 at the set temperature and stopping the operation thereof at the set temperature by using the control unit 22, on the basis of the detected value from the first temperature sensor 21A provided at the 100% hot-water storage level, it is possible to keep the set temperature at the installation position of the first temperature sensor 21A. Therefore, it is possible to easily satisfy the above requirement.

However, because of natural heat dissipation, heat transfer, etc. the temperature difference between the high-temperature part and the low-temperature part becomes smaller due to a fall in temperature at the high-temperature part and a rise in temperature at the low-temperature part. Also, under conditions where the width of the temperature layer expands, in the case in which the above-described temperature-maintaining operation (additional heating operation) is performed, and it is determined that additional heating is completed by examining the detected value from the first temperature sensor 21A only, as shown in Fig. 2, at the top of the hot-water storage tank 11, the hot-water temperature which was the initial set temperature shown by the solid line A after heating-up is completed gradually drops, as shown by the broken line B, and the amount of stored heat ends up being lower. As a result of this, when discharging hot water, it becomes not possible to supply high-temperature water with the set temperature.

Thus, in this embodiment, a correction means 25 is provided in the control unit 22, and during the above-described temperature-maintaining operation (additional heating operation), the set temperature of the first temperature sensor 21A provided at the 100% hot-water storage level is corrected so as to control the operation/stopping of the heat-pump heating unit 2 and the water pump 14 with this corrected value serving as a new target temperature. The correction means 25 corrects the set temperature of the first temperature sensor 21A by using the detected value from a temperature sensor provided above the first temperature sensor 21A (in the case of this embodiment, either the temperature sensor 21B or 21N, but if a large number of other temperature sensors are provided, it may be any one of them; here, an example of the case where the second temperature sensor 21B is used is described).

More specifically, as shown in Fig. 2, the set temperature of the first temperature sensor 21A is corrected on the basis of a temperature difference ($\Delta T - \Delta T'$) between the detected value ($\Delta T$) detected during the heating-up operation by the second temperature sensor 21B provided above the first temperature sensor 21A and the detected value ($\Delta T'$)

from the second temperature sensor 21B, which is provided thereabove, when the detected value from the first temperature sensor 21A during the temperature-maintaining operation (additional heating operation) reaches the set temperature. Thus, the operation/stopping of the heat-pump heating unit 2 and the water pump 14 is controlled by the control unit 22 with this corrected value serving as a new target temperature.

The corrected value is calculated by using equation (1) below:

$$\texttt{corrected value = set temperature + } (\Delta T\text{-}\Delta T')/\alpha\text{, where } \alpha \texttt{ is}$$

$$\texttt{an arbitrary coefficient} \qquad (1)$$

In equation (1) above, the coefficient $\alpha$ is preferably set to 2. The reason for this is that, by controlling the hot-water temperature at the top of the hot-water storage tank 11 to an intermediate temperature between the initial detected value ($\Delta T$) detected during the heating-up operation and the detected value ($\Delta T'$) detected during the additional heating operation and maintaining it thereat, as shown by the two-dot-chain line C in Fig. 2, balance is achieved between maintaining the hot-water temperature at the top of the hot-water storage tank 11 at a temperature close to the set temperature and maintaining the COP (coefficient of performance) of the heat-pump heating unit 2 at a high COP by the additional heating operation, which are in a mutually conflicting relationship, so as to achieve control for suppressing the respective reductions thereof to moderate levels.

With the configuration described above, this embodiment has the following advantageous effects.

In the above-described hot-water supply system 1 and the control method therefor, it is possible to produce high-temperature water by operating the heat-pump heating unit 2 and the water pump 14 to cause high-temperature, high-pressure refrigerant gas to flow in the refrigerant flow channel 4A of the water/refrigerant heat exchanger (gas cooler) 4, and by causing low-temperature water from the hot-water storage tank 11 to flow in the water flow channel 4B to bring about heat exchange therebetween, thus heating the low-temperature water with the high-temperature, high-pressure refrigerant gas. By supplying this high-temperature water to the top of the hot-water storage tank 11 and sequentially storing hot water by forming temperature stratification, it is possible to store a required amount of high-temperature water.

When the plurality of temperature sensors 21N, 21B, and 21A provided in the vertical direction in the hot-water storage tank 11 sequentially detect the set temperature (for example, 90 °C), indicating that hot water of the set temperature (90 °C) is stored up to the installation positions of the respective temperature sensors, it is possible to determine the stored amount of high-temperature water. Also, completion of heating-up is determined by detecting the set temperature with the first temperature sensor 21A which is provided at the 100% hot-water storage level, and the operation of the heat-pump heating unit 2 and the water pump 14 is stopped.

After heating-up is completed, a heat-maintaining mode is started, and when the hot-water temperature falls to a set temperature due to natural heat dissipation and heat transfer from the top of the tank to the bottom thereof, the temperature-maintaining operation (additional heating operation) is performed. At this time, the control unit 22 corrects the set temperature of the first temperature sensor 21A by using the correction means 25, based on equation (1) above (set temperature + $(\Delta T\text{-}\Delta T')/\alpha$), and controls the operation and stopping of the heat-pump heating unit 2 and the water pump 14 with that corrected value serving as a new target temperature. By doing so, in contrast to the case where completion of additional heating is determined using only the detected value (set temperature) of the first temperature sensor 21A, the drop in hot-water temperature at the top of the hot-water storage tank 11 can be made small relative to the state shown by the broken line B to the state shown by the two-dot chain line C.

Thus, with this embodiment, during the additional heating operation for maintaining the temperature after completing 100% hot-water storage, when the first temperature sensor 21A reaches the set temperature, based on the temperature difference ($\Delta T\text{-}\Delta T'$) between the detected value ($\Delta T'$) from the second temperature sensor 21B provided thereabove and the detected value ($\Delta T$) that the second temperature sensor 21B detected during the heating-up operation, the set temperature of the first temperature sensor 21A is corrected, and the operation of the heat-pump heating unit 2 and the water pump 14 is controlled with this corrected value serving as the target temperature.

By doing so, as shown in Fig. 2, the amount of the drop in the hot-water temperature at the top of the hot-water storage tank 11 can be reduced from "$\Delta T\text{-}\Delta T'$" to a smaller temperature difference. As a result, the drop in the amount of stored heat during the standing period after completing 100% hot-water storage is suppressed, and when discharging hot water, it is possible to supply hot water with a higher temperature that is close to the originally set temperature.

In other words, the above-described corrected value is obtained by the correction means 25 on the basis of equation (1) above (set temperature + $(\Delta T\text{-}\Delta T')/\alpha$, where $\alpha$ is an arbitrary coefficient). Thus, during the additional heating operation, the hot-water temperature at the top of the hot-water storage tank 11 can be subjected to additional heating to a temperature between the initial detected value ($\Delta T$) detected during the heating-up operation and the detected value ($\Delta T'$) detected during the additional heating operation. Thus, while maintaining the temperature, the amount of the drop in the hot-water temperature at the top of the hot-water storage tank 11 can be reduced to the utmost, making it possible to supply higher-temperature hot water. In addition, it is also possible to suppress a drop in COP (coefficient of performance) of the heat-pump heating unit 2 due to excessive additional heating.

In equation (1) for calculating the corrected value described above, the coefficient $\alpha$ is set to 2. Therefore, during the additional heating operation, the hot-water temperature at the top of the hot-water storage tank 11 can be controlled to and maintained at an intermediate temperature substantially half way between the initial detected value ($\Delta T$) detected during the heating-up operation and the detected value ($\Delta T'$) detected during the additional heating operation. By doing so, balance is achieved between maintaining the hot-water temperature and maintaining the COP of the heat-pump heating unit 2, which are in a mutually conflicting relationship, and it is possible to perform control for suppressing the respective reductions thereof to moderate levels.

The present invention is not limited to the invention according to the above-described embodiment. For example, the heat-pump heating unit 2 in the embodiment described above may be a heat-pump device of the two-stage compression type, so as to achieve higher performance, and the hot-water supplying unit 10 may be of the on-demand type that supplies hot water instantaneously.

{Reference Signs List}

| 1 | hot-water supply system |
| 2 | heat-pump heating unit (heating unit) |
| 5 | water/refrigerant heat exchanger (gas cooler) |
| 10 | hot-water supplying unit |
| 11 | hot-water storage tank |
| 12 | water circuit |
| 13 | low-temperature water pipe |
| 14 | water pump |
| 15 | high-temperature water pipe |
| 21A | temperature sensor (first temperature sensor) |
| 21B | temperature sensor (second temperature sensor) |
| 21N | temperature sensor |
| 22 | control unit |
| 25 | correction means |

## Claims

1. A hot-water supply system (1) comprising:

   a heating unit (2) configured to produce high-temperature water by heating low-temperature water; and
   at least one hot-water storage tank (11) that is connected to the heating unit (2) via a low-temperature water pipe (13) and a high-temperature water pipe (15) and that is configured to sequentially store the high-temperature water produced in the heating unit (2), forming a temperature stratification from a top side of the hot-water storage tank (11),
   wherein the hot-water supply system is capable of maintaining temperature of hot water stored in the hot-water storage tank (11) after completion of storing hot water at a set temperature,
   wherein a plurality of temperature sensors (21A, 21B, 21N) are provided to be mutually apart in a vertical direction in the hot-water storage tank (11), and the temperature sensor (21A) provided at the lowest level therein is a first temperature sensor that detects a situation that the hot water with the set temperature is stored to a 100% level,
   the hot-water supply system further comprising:

   a control unit (22) that is configured to control the operation and stopping of the heating unit (2) during a heating-up operation and an additional heating operation on the basis of a detected value from the first temperature sensor (21A), **characterized in that** during the additional heating operation, when the detected value from the first temperature sensor (21A) reaches a set temperature, the control unit (22) is configured to correct the set temperature of the first temperature sensor based on a temperature difference $\Delta T$-$\Delta T'$ between a detected value $\Delta T'$ from a second temperature sensor (21B, 21N) provided above the first temperature sensor and a detected value ∆T that the second temperature sensor detects during the heating-up operation, and the control unit (22) is configured to control the operation and stopping of the heating unit with the corrected value which serves as a target temperature.

2. The hot-water supply system (1) according to claim 1, wherein the corrected value is calculated by an equation (1) shown below:

$$\texttt{set temperature + (}\Delta\texttt{T-}\Delta\texttt{T')/}\alpha \quad \texttt{(1)}$$

where $\alpha$ is an arbitrary coefficient.

3. The hot-water supply system (1) according to claim 2 wherein, in the equation (1) for calculating the corrected value, the coefficient $\alpha$ is set to 2.

4. A control method of a hot-water supply system (1),
   wherein the hot-water supply system comprises:

   a heating unit (2) that produces high-temperature water by heating low-temperature water; and
   at least one hot-water storage tank (11) that is connected to the heating unit via a low-temperature water pipe (13) and a high-temperature water pipe (15) and that sequentially stores the high-temperature water produced in the heating unit, forming a temperature stratification from a top side of the hot-water storage tank (11),
   the hot-water supply system being capable of maintaining temperature of hot water stored in the hot-water storage tank (11) after completion of storing hot water at a set temperature,
   wherein the hot-water supply system has a plurality of temperature sensors (21A, 21B, 21N) being provided to be mutually apart in a vertical direction in the hot-water storage tank (11), and the temperature sensor (21A) provided at the lowest level therein is a first temperature sensor that detects a situation that the hot water with the set temperature is stored to a 100% level,
   the hot-water supply system control method comprising:

   a step of controlling the operation and stopping of the heating unit (2) during a heating-up operation and an additional heating operation on the basis of a detected value from the first temperature sensor (21A), **characterized in that** the method further comprises the step of correcting the set temperature of the first temperature sensor (21A) based on a temperature difference ∆T-∆T' between a detected value ∆T' of a second temperature sensor (21B, 21N) provided above the first temperature sensor and a detected value ∆T that the second temperature sensor detects during the heating-up operation, the correction is performed during the additional heating operation and when the detected value from the first temperature sensor (21A) reaches the set temperature, and controlling the operation and stopping of the heating unit with the corrected value serving as a target temperature.

**Patentansprüche**

1. Heißwasserversorgungssystem (1), umfassend:

   eine Heizeinheit (2), die dafür ausgelegt ist, Wasser hoher Temperatur durch Erwärmen von Wasser niedriger Temperatur zu erzeugen, und
   mindestens einen Heißwasserspeichertank (11), der mit der Heizeinheit (2) über eine Niedertemperatur-Wasserleitung (13) und eine HochtemperaturWasserleitung (15) verbunden ist und dafür ausgelegt ist, das Wasser hoher Temperatur, das in der Heizeinheit (2) erzeugt wird, sequenziell zu speichern, wodurch eine Temperaturschichtung von einer oberen Seite des Heißwasserspeichertanks (11) aus gebildet wird,
   wobei das Heißwasserversorgungssystem in der Lage ist, die Temperatur des Heißwassers, das in dem Heißwasserspeichertank (11) gespeichert wird, nach Abschluss des Speicherns von Heißwasser auf einer festgelegten Temperatur zu halten,
   wobei mehrere Temperaturfühler (21A, 21B, 21N), in einer vertikalen Richtung voneinander entfernt, in dem Heißwasserspeichertank (11) bereitgestellt sind, und wobei der Temperaturfühler (21A), der auf der untersten Ebene darin bereitgestellt, ein erster Temperaturfühler ist, der den Fall erkennt, dass das Heißwasser mit der festgelegten Temperatur bis zu einem Pegel von 100 % gespeichert ist,
das Heißwasserversorgungssystem ferner umfassend:

eine Steuereinheit (22), die konfiguriert ist, das Betreiben und Anhalten der Heizeinheit (2) während eines Aufheizbetriebs und eines zusätzlichen Heizbetriebs auf Basis eines von dem ersten Temperaturfühler (21A) erfassten Wertes zu steuern,
**dadurch gekennzeichnet, dass** die Steuereinheit (22) während des zusätzlichen Heizbetriebs konfiguriert ist, wenn der von dem ersten Temperaturfühler (21A) erfasste Wert eine festgelegte Temperatur erreicht, die festgelegte Temperatur des ersten Temperaturfühlers basierend auf einer Temperaturdifferenz $\Delta T - \Delta T'$ zwischen einem erfassten Wert von einem zweiten Temperaturfühler (21B, 21N), der über dem ersten Temperaturfühler bereitgestellt ist, und einem erfassten Wert $\Delta T$, den der zweite Temperaturfühler während des Aufheizbetriebs erfasst, zu korrigieren, und dass die Steuereinheit (22) konfiguriert ist, das Betreiben und Stoppen der Heizeinheit mit dem korrigierten Wert zu steuern, der als eine Zieltemperatur dient.

2. Heißwasserversorgungssystem (1) nach Anspruch 1, wobei der korrigierte Wert durch eine Gleichung (1) berechnet wird, die nachstehend gezeigt ist:

$$\text{festgelegte Temperatur} + (\Delta T - \Delta T') / \alpha \qquad (1)$$

wobei $\alpha$ ein beliebiger Koeffizient ist.

3. Heißwasserversorgungssystem (1) nach Anspruch 2 wobei der Koeffizient $\alpha$ in der Gleichung (1) zur Berechnung des korrigierten Wertes auf 2 festgelegt ist.

4. Steuerverfahren eines Heißwasserversorgungssystems (1), wobei das Heißwasserversorgungssystem umfasst:

eine Heizeinheit (2), die Wasser hoher Temperatur durch Erwärmen von Wasser niedriger Temperatur erzeugt, und
mindestens einen Heißwasserspeichertank (11), der über eine Niedertemperaturwasserleitung (13) und eine Hochtemperaturwasserleitung (15) mit der Heizeinheit verbunden ist und der das Wasser hoher Temperatur, das in der Heizeinheit erzeugt wird, sequenziell speichert, wodurch eine Temperaturschichtung von einer oberen Seite des Heißwasserspeichertanks (11) aus gebildet wird,
wobei das Heißwasserversorgungssystem in der Lage ist, die Temperatur des Heißwassers, das in dem Heißwasserspeichertank (11) gespeichert wird, nach Abschluss des Speicherns von Heißwasser auf einer festgelegten Temperatur zu halten,
wobei das Heißwasserversorgungssystem mehrere Temperaturfühler (21A, 21B, 21N) aufweist, die, in einer vertikalen Richtung voneinander entfernt, in dem Heißwasserspeichertank (11) bereitgestellt sind, und wobei der Temperaturfühler (21A), der auf der untersten Ebene darin bereitgestellt, ein erster Temperaturfühler ist, der den Fall erkennt, dass das Heißwasser mit der festgelegten Temperatur bis zu einem Pegel von 100 % gespeichert ist,
das Heißwasserversorgungssystem-Steuerverfahren umfassend:

einen Schritt des Steuerns des Betreibens und Anhaltens der Heizeinheit (2) während eines Aufheizbetriebs und eines zusätzlichen Heizbetriebs auf Basis eines von dem ersten Temperaturfühler (21A) erfassten Wertes, **dadurch gekennzeichnet, dass** das Verfahren ferner den Schritt umfasst:

Korrigieren der festgelegten Temperatur des ersten Temperaturfühlers (21A) basierend auf einer Temperaturdifferenz $\Delta T - \Delta T'$ zwischen einem erfassten Wert $\Delta T'$ eines zweiten Temperaturfühlers (21B, 21N), der über dem ersten Temperaturfühler bereitgestellt ist, und einem erfassten Wert $\Delta T$, den der zweite Temperaturfühler während des Aufheizbetriebs erfasst, wobei die Korrektur während des zusätzlichen Heizbetriebs und dann, wenn der von dem ersten Temperaturfühler (21A) erfasste Wert die festgelegte Temperatur erreicht, durchgeführt wird, und Steuern des Betreibens und Anhaltens der Heizeinheit, wobei der korrigierte Wert als eine Zieltemperatur dient.

**Revendications**

1.  Système d'alimentation en eau chaude (1) comportant :

    une unité de chauffage (2) configurée pour produire l'eau à haute température en chauffant de l'eau à basse température ; et
    au moins un réservoir de stockage d'eau chaude (11) qui est relié à l'unité de chauffage (2) par l'intermédiaire d'une conduite d'eau à basse température (13) et d'une conduite d'eau à haute température (15) et qui est configuré pour stocker de manière séquentielle l'eau à haute température produite dans l'unité de chauffage (2), en formant une stratification de température depuis un côté supérieur du réservoir de stockage d'eau chaude (11),
    dans lequel le système d'alimentation en eau chaude est capable de maintenir la température de l'eau chaude stockée dans le réservoir de stockage d'eau chaude (11) après la fin du stockage de l'eau chaude à une température de consigne,
    dans lequel une pluralité de capteurs de température (21A, 21B, 21N) est prévue de façon à ce qu'ils soient mutuellement espacés dans une direction verticale dans le réservoir de stockage d'eau chaude (11), et le capteur de température (21A) prévu au niveau le plus bas est un premier capteur de température qui détecte une situation où l'eau chaude avec la température de consigne est stockée à un niveau de 100%,
    le système d'alimentation en eau chaude comportant en outre :

    une unité de commande (22) qui est configurée pour commander le fonctionnement et l'arrêt de l'unité de chauffage (2) pendant une opération de montée en température et une opération de chauffage supplémentaire sur la base d'une valeur détectée par le premier capteur de température (21A),
    **caractérisé en ce que**
    pendant l'opération de chauffage supplémentaire, quand la valeur détectée par le premier capteur de température (21A) atteint une température de consigne, l'unité de commande (22) est configurée pour corriger la température de consigne du premier capteur de température sur la base d'une différence de température $\Delta T - \Delta T'$ entre une valeur détectée $\Delta T'$ d'un deuxième capteur de température (21B, 21N) prévu au-dessus du premier capteur de température et une valeur détectée $\Delta T$ que le deuxième capteur de température détecte pendant l'opération de montée en température, et l'unité de commande (22) est configurée pour commander le fonctionnement et l'arrêt de l'unité de chauffage avec la valeur corrigée qui sert de température de cible.

2.  Système d'alimentation en eau chaude (1) selon la revendication 1, dans lequel la valeur corrigée est calculée par une équation (1) représentée ci-dessous :

$$\text{température de consigne} + (\Delta T - \Delta T')/\alpha \quad (1)$$

où a est un coefficient arbitraire.

3.  Système d'alimentation en eau chaude (1) selon la revendication 2 dans lequel, dans l'équation (1) pour le calcul de la valeur corrigée, le coefficient $\alpha$ est établi à 2.

4.  Procédé de commande d'un système d'alimentation en eau chaude (1), selon lequel le système d'alimentation en eau chaude comporte :

    une unité de chauffage (2) qui produit de l'eau à haute température en chauffant de l'eau à basse température ; et
    au moins un réservoir de stockage d'eau chaude (11) qui est relié à l'unité de chauffage (2) par l'intermédiaire d'une conduite d'eau à basse température (13) et d'une conduite d'eau à haute température (15) et qui est configuré pour stocker de manière séquentielle l'eau à haute température produite dans l'unité de chauffage (2), en formant une stratification de température depuis un côté supérieur du réservoir de stockage d'eau chaude (11),
    le système d'alimentation en eau chaude étant capable de maintenir la température de l'eau chaude stockée dans le réservoir de stockage d'eau chaude (11) après la fin du stockage de l'eau chaude à une température de consigne,
    selon lequel le système d'alimentation en eau chaude a une pluralité de capteurs de température (21A, 21B, 21N) qui sont prévus pour être mutuellement espacés dans une direction verticale dans le réservoir de stockage d'eau chaude (11), et le capteur de température (21A) prévu au niveau le plus bas est un premier capteur de température qui détecte une situation où l'eau chaude avec la température de consigne est stockée à un niveau de 100%,

le procédé de commande de système d'alimentation en eau chaude comportant :

une étape de commande du fonctionnement et de l'arrêt de l'unité de chauffage (2) pendant une opération de montée en température et une opération de chauffage supplémentaire sur la base d'une valeur détectée par le premier capteur de température (21A),

**caractérisé en ce que** le procédé comporte en outre l'étape de correction de la température de consigne du premier capteur de température (21A) sur la base d'une différence de température ∆T -∆T' entre une valeur détectée ∆T' d'un deuxième capteur de température (21B, 21N) prévu au-dessus du premier capteur de température et une valeur détectée ∆T que le deuxième capteur de température détecte pendant l'opération de montée en température, la correction étant réalisée pendant l'opération de chauffage supplémentaire et quand la valeur détectée par le premier capteur de température (21A) atteint la température de consigne, et de commande du fonctionnement et de l'arrêt de l'unité de chauffage avec la valeur corrigée qui sert de température de cible.

FIG. 1

# FIG. 2

**EP 2 848 875 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002349965 A
- US 2007179678 A1